# EUROPÄISCHE PATENTSCHRIFT

(11) **EP 3 159 056 B1**
(45) Veröffentlichungstag und Bekanntmachung des Hinweises auf die Patenterteilung: **04.12.2024**
(21) Anmeldenummer: 16201755.2
(22) Anmeldetag: 16.05.2013
(51) Int. Cl.: D04H 3/007, B01D 39/16

(54) **FILTERMEDIUM AUS SYNTHETISCHEM POLYMER**
FILTER MEDIUM MADE OF A SYNTHETIC POLYMER
MILIEU FILTRANT EN POLYMÈRE SYNTHÉTIQUE

(30) Priorität: 14.06.2012 DE 102012011900
(43) Veröffentlichungstag der Anmeldung: 26.04.2017
(62) Teilanmeldung aus: 13724167.5
(73) Patentinhaber: Irema-Filter GmbH, 92353 Postbauer-Pavelsbach (DE)
(72) Erfinder: Seeberger, Andreas, 90480 Nürnberg (DE)
(74) Vertreter: Hahner, Ralph

(56) Entgegenhaltungen:
- WO-A1-00/13765
- WO-A2-2011/002878
- DE-A1- 102007 011 365
- DE-A1- 19 920 983
- DE-T2- 69 331 065
- DE-T2- 69 704 366
- US-A1- 2004 245 171
- US-A1- 2008 026 172
- US-A1- 2010 222 755
- US-A1- 2010 313 757

## Beschreibung

Die Erfindung betrifft ein Filtermedium aus synthetischem Polymer mit einer ersten Lage Vlies, welches im Schmelz-Spinn-Verfahren hergestellt ist.

Filtermedien aus Vlies dieser Art werden in Filtern, z. B. in Raumluftfiltern und Klimaanlagen, insbesondere aber in Luftfiltern für den Kraftfahrzeuginnenraum oder für Motoren eingesetzt.

Die Vliesstoffe werden üblicherweise nach einem Urformprozess mit einem Schmelz-Spinn-Verfahren wie z. B. einem Spun-Bond-Verfahren oder einem Melt-Blown-Verfahren hergestellt, wie dies z. B. in der DE 41 23 122 A1 beschrieben ist.

Die Ansaugluft von Verbrennungskraftmaschinen, z. B. in Kraftfahrzeugen oder im Off-Highway-Bereich wird üblicherweise gefiltert, um den motorischen Verbrennungsraum vor einer mechanischen Beschädigung durch angesaugte Partikel aus der Umgebungsluft zu schützen. Ein wichtiges Kriterium beim Design der Filterelemente ist es, eine hohe Standzeit des Filters bei gleichzeitig hoher Abscheideleistung der angesaugten Partikel zu gewährleisten.

Auf der anderen Seite weisen Kraftfahrzeuge jedoch ein genau berechnetes Energieverteilungssystem auf. Im Bereich Heizung/Lüftung/Klima stehen dabei nur begrenzte Energien zur Verfügung. Aufgrund der immer strengeren Abgasvorgaben müssen diese Energiemengen immer stärker reduziert werden, insbesondere auch bei Elektrofahrzeugen, bei denen mechanische Energien möglichst nur für den Antrieb angewendet werden soll. Auch die Kosten von Fahrzeugkomponenten dürfen sich nur in einem engen Rahmen bewegen. Andererseits werden von Fahrzeugkäufern aber immer mehr Ansprüche an Komfort und Sicherheit gestellt. Unter diesen Gesichtspunkten sind Partikelfilter von einem möglichst niedrigen Druck auf Fall- bzw. Differenzdruck von besonderer Bedeutung, da von dem Lüftermotor nur ein niedriger Druck generiert werden muss und der Energieverbrauch somit gering ausfüllt. Des Weiteren arbeitet dieser durch die geringere benötigte Leistung auch leiser, wodurch die Geräuschentwicklung verringert und somit der Fahrkomfort wesentlich erhöht wird.

Die Forderung nach Filtersystemen mit niedrigem Differenzdruck konkurriert mit der geforderten Abscheideleistung und der geforderten Standzeit, also der Zeit ausgedrückt in Kilometerlaufleistung, die ein Filter im Fahrzeug verbleiben kann, bis er ausgetauscht werden muss.

Beispielsweise genügen für den Fahrzeuginnenraum Pollenfilter, die nur Pollen aus der einströmenden Luft im Fahrzeug filtern, nicht. Die Allergene, auf die das Immunsystem von Allergikern reagiert, sind Proteine, deren Durchmesser nur ein Bruchteil des Pollendurchmessers beträgt. Sie liegen im Größenbereich um 0,1 Mikrometer, d.h. in dem Bereich der für Partikelfilter die größten Probleme aufweist, dem sogenannten MPPS (Most Penetrating Particle Size). Dementsprechend sollte die Abscheideleistung in diesem Größenbereich mindestens 50 % betragen, wobei diese mittels eines Aerosols gemessen wird, dessen Partikel in etwa die gleiche Dichte aufweisen, z. B. Natriumchlorid. Gleichzeitig sollen von derartigen Filtern beim Einbauen in Kraftfahrzeugen Standzeiten von mindestens 30.000 km erreicht werden.

In gängigen Filtern, z. B. in Ringfiltern oder Rahmenfiltern, wird das Filtermaterial zickzack-förmig gefaltet, d.h. plissiert. Um zu verhindern, dass benachbarte Filterflächen einer Plissierung aufeinander fallen und sich die angeströmte Oberfläche dadurch verringert, werden bekanntermaßen Abstandshalter benutzt. Solche Abstandshalter werden üblicherweise durch Prägung des Filtermaterials erreicht. Prägung ist aber nur bei Papierfiltern in zufriedenstellender Weise möglich. Filter aus PP, PET oder Polyester lassen sich dagegen sehr schlecht oder gar nicht prägen.

Unter Beibehaltung eines akzeptablen Druckverlustes bietet sich die Möglichkeit zur Steigerung der Abscheideeffizienz im MPPS-Bereich durch den gezielten Einsatz zusätzlicher elektrostatischer Abscheidemechanismen an. Elektretfilter verfügen über die Zusatzkomponente Elektrostatik, d.h. Partikel werden neben mechanischen Abscheidemechanismen, wie Interception, Trägheit bzw. Impaktion, Diffusion und Schwerkraft auch durch Coulomb-, Dipol- und Spiegelladungskräfte abgeschieden. Auf diese Weise können deutliche Verbesserungen in der Filtrationsleistung erzielt werden.

Wie in der US 6,524,360 B2 beschrieben, werden Elektretfiltermedien üblicherweise hergestellt, indem ein Polymer extrudiert wird. Eine elektrisch statische Aufladung des Filtermediums erfolgt über eine Coronaentladung oder ein triboelektrisches Verfahren. Ein Verfahren zur Coronaentladung zur elektrostatischen Aufladung eines Elektretfiltermediums ist z. B. aus der US 4,588,537 bekannt.

Ferner ist es bekannt, die elektrostatische Wirkung des Elektretfiltermediums durch den Zusatz von Additiven, z. B. von Fluorverbindungen, wie in der US 6,808,551 B2 beschrieben, zu verbessern.

Gängige Elektretfilter weisen jedoch eine geringe Ladungsstabilität auf, was zu einer zeitlichen Begrenzung des elektrostatischen Effektes in der Filtrationsphase führt. Ferner verlieren gängige Elektretfilter durch die Einwirkung von Feuchtigkeit ihren elektrostatischen Effekt.

DE 97 04 366 T2 offenbart Mikrofasern, welche einen durchschnittlichen Durchmesser im Bereich von 0,5 bis 30 um (Mikrometer), vorzugsweise 0,5 bis 10 m (Mikrometer) und am stärksten bevorzugt 1 bis 5 um (Mikrometer) aufweisen. Fasern, die innerhalb des breiten Bereichs, aber vorzugsweise innerhalb des engen Bereichs liegen, weisen einen geeigneten Durchmesser auf, um Teilchen im Größenbereich von 0,1 bis 20 m (Mikrometer) zu entfernen, wobei es sich um die Teilchen von der Größe handelt, wie sie durch die Filternetze entfernt werden. Vlies-Filterstoffe die aus den Mikrofasern hergestellt wurden, weisen ein Gewicht zwischen 0,0169 und 0,34 kg/m (0,5 und 10 oz/square yard), vorzugsweise zwischen 0,024 und 0,10 kg/m (0,7 und 3 oz/square yard) auf. Die Dicke des Stoffes sollte zwischen 0,1 27 und 0,762 mm (5 bis 30 mil) liegen. Innerhalb dieser Grenzen sind erhebliche Variationen möglich. Es liegt am Können des Fachmanns, die architektonischen Abmessungen und Merkmale innerhalb dieser Grenzen zu variieren und die Filterleistung/Flussdichte für den gewünschten Zweck zu verbessern und letzten Endes zu optimieren. Die Mikrofaser-Filterstoffe können als Teil einer Filterkonstruktion verwendet werden und können mit einer Schicht aus einem anderen (im allgemeinen schmelzgebundenen) Stoff laminiert werden oder können die Form einer Dreischicht-Konstruktion aufweisen, bei der der schmelzoesponnene, insbesondere schmelzgeblasene Mikrofaserstoff den Kern bildet, während die anderen schmelzgebundenen Stoffe die äußeren Schichten bilden. Schmelzgebundene Vliesstoffe und ihre Fasern, die sich von ihrer Art her für solche Schichtstrukturen eignen, können anhand von beliebigen Verfahren hergestellt werden, beispielsweise durch Schmelzspinnen des Polymers, wie im US-Patent Nr. 3 821 062 (Henderson), 3563 838 (Edward) und 3 338 992 (Kinney) beschrieben. Die verschiedenen schrneizoebundenen Stofffasem der Schichtstruktur sollten einen Durchmesser von mindestens 20 µm (Mikrometer) aufweisen, der somit deutlich höher sein sollte als der bevorzuate Mikrofaser-Durchmesser von 1 bis 5 µm (Mikrometer), der für den Innenstoff verwendet wird. Die Spunbonded-Schicht liefert mechanische Stärke und Integrität, während die Innenschicht die erwünschte Mikroporösität und die erwünschten Filtereigenschaften liefert.

WO 2011/002878 A2 offenbart ein Spinnvlies mit einer Festigkeit von weniger als 8.0 % bis etwa 4,0 % und einem Verhältnis von effektivem Faserdurchmesser zu tatsächlichem Faserdurchmesser von mindestens 1.40, wobei das Vlies im Wesentlichen frei von gekräuselten Fasern, lückenaebildeten Fasern und Bikomponentenfasern ist.

Die Erfindung stellt sich zur Aufgabe, ein Filtermedium mit hoher Standzeit und hoher Abscheideleistung bereitzustellen.

Diese Aufgabe wird gelöst durch ein Filtermedium gemäß Anspruch 1 und einen Filtergemäß Anspruch 10.

Das erfindungsgemäße Filtermedium hat den Vorteil, dass der Differenzdruck, d.h. der Druckverlust bei einer definierten Anströmgeschwindigkeit gering ist. Ferner weist das erfindungsgemäße Filtermedium eine hohe statische Ladungskapazität auf, wodurch der elektrostatische Effekt besonders ausgeprägt ist. Durch den hohen elektrostatischen Effekt ergibt sich eine höhere Effizienz bei niedrigerem Druckverlust. Während bei einem Filtermedium mit Nanofasern eine Abscheideleistung von ca. 80 % bei einem Differenzdruck von 110 Pa (Pascal) erreicht wird, wird bei dem erfindungsgemäßen Filtermedium eine Abscheideleistung von 80 % schon beim Differenzdruck von 60 Pa erreicht. Ferner ist das erfindungsgemäße Filtermedium wieder aufladbar, d.h. der elektrostatische Effekt ist regenerierbar, wenn die statische Ladung durch eine lange Standzeit oder z. B. die Einwirkung von Feuchtigkeit verloren geht.

Ein Vlies im Sinne der Erfindung ist ein nicht gewebter Stoff, bei welchem Faserstränge im Urformprozess aufeinander abgelegt werden und sich zu einem Vlies verbinden. Gegebenenfalls erfolgt in einem weiteren Schritt eine Verfestigung durch Kalandrieren, Thermobonding, Heißluft- und/oder Ultraschallschweißen.

Ein Polymer im Sinne der Erfindung ist ein reines Polymer oder eine Polymermischung. Insbesondere weist dieses eine charakteristische Verteilung der Molekülkettenlänge und/oder eine charakteristische Molekülstruktur auf.

Luftdurchlässigkeit im Sinne der Erfindung ist jenes Volumen pro Quadratmeter, welches ein Faservlies bei 200 Pa Anströmdruck pro Sekunde durchströmt.

Massenbelegung bzw. Flächengewicht im Sinne der Erfindung ist die flächenbezogene Masse und wird insbesondere nach DIN EN 29073-1 bestimmt.

Aufbringbar im Sinne der Erfindung bedeutet, dass ein eine Lage bzw. ein Filtermedium über einen längeren Zeitraum, insbesondere zumindest für mehrere Tage oder Monate, elektrostatisch aufgeladen werden kann, und insbesondere, dass auf dem der Lage bzw. dem Filtermedium elektrische Ladung gespeichert werden kann.

Die durchschnittliche Porengröße im Sinne der Erfindung wird in Anlehnung an den Bubble-Point Test nach den Normen ASTM D6767, ASTM F316-0 und/oder ISO 2942, ISO 4003, insbesondere mit dem Messgerät Topas PSM 165 bestimmt.

Die Abscheideleistung im Sinne der Erfindung wird mit NaCl-Partikeln, insbesondere mit einer Größe von 0,3µm bis 0,5µm und nach DIN 71460-1, bei einer Anströmgeschwindigkeit von 0,14m/s bestimmt.

Ein Faserbündel im Sinne der Erfindung besteht aus mehreren Fasersträngen.

Verschränkt im Sinne der Erfindung bedeutet, das Fasern zweier Vlies-Lagen so miteinander vermengt und verwirbelt sind, dass die beiden Vlies-Lagen fest miteinander verbunden sind.

Bevorzugte Ausgestaltungen werden in den Unteransprüchen beansprucht.

In einer bevorzugten Ausgestaltung sind die Weichheit, die Elastizität, die Kompressibilität, die Bestfestigkeit mit Durchstoßkörper, die Dicke, die Massenbelegung, die Abrasion und/oder die Zugfestigkeit nach einem Tensiletest der ersten Lage Vlies derart beschaffen, dass zumindest eine Oberfläche der ersten Lage Vlies eine flauschige Haptik aufweist.

Versuche haben ergeben, dass ein Filtermedium mit einer ersten Lage Vlies mit einer flauschigen Haptik die elektrostatische Kapazität des Filtermediums wesentlich erhöht. Dies verbessert die Abscheideleistung aufgrund des elektrostatischen Effekts des Filtermediums.

In einer weiteren bevorzugten Ausgestaltung beträgt die Abscheideleistung der ersten Lage Vlies vor Aufbringung der Ladung im Wesentlichen 5% bis 50%, bevorzugt 10% bis 30%, bevorzugter 15% bis 20% und nach Aufbringung der statischen Ladung im Wesentlichen 50% bis 95%, bevorzugter 60% bis 90%, noch bevorzugter 70 bis 80% und am bevorzugtesten 75%.

In einer weiteren bevorzugten Ausgestaltung weist die erste Lage Vlies eine Massenbelegung von etwa 35 bis 60 g/m², bevorzugt von etwa 40 bis 55 g/m², besonders bevorzugt etwa von 45 bis 50 g/m² und am bevorzugtesten etwa von 47,5 g/m² auf.

In einer weiteren bevorzugten Ausgestaltung weist die erste Lage Vlies eine Dicke etwa von 0,4 mm bis 0,7 mm, bevorzugt etwa von 0,5 mm bis 0,6 mm und am bevorzugtesten von etwa 0,55 mm auf.

Diese Wertebereiche der Massenbelegung und der Dicke haben sich in Bezug auf Standzeit und Differenzdruck des Filtermediums als besonders vorteilhaft erwiesen.

In einer weiteren bevorzugten Ausgestaltung weist ist die erste Lage Vlies eine Luftdurchlässigkeit etwa von 800 l/m²s bis 1300 l/m²s, bevorzugt etwa von 900 l/m²s bis 1200 l/m²s und am bevorzugtesten etwa von 1000 l/m²s auf.

In einer weiteren bevorzugten Ausgestaltung weist die erste Lage Vlies mit einer durchschnittliche Porengröße von mehr als 10 µm bis 60 µm, bevorzugt von 20 µm bis 50 µm, bevorzugter von 30 bis 40 µm und am bevorzugtesten von 35 µm auf.

In einer weiteren bevorzugten Ausgestaltung wird die erste Lage Vlies eine Verarbeitungstemperatur des Polymers etwa von 230°C bis 280°C, bevorzugt etwa von 240°C bis 270°C und am bevorzugtesten etwa von 250°C bis 260°C hergestellt wird.

Diese Verarbeitungstemperatur hat sich in Bezug auf Polymere mit dem beanspruchten Melt-Flow-Index als besonders vorteilhaft erwiesen.

In einer weiteren bevorzugten Ausgestaltung sind 50 % bis 100 % und bevorzugt 80 % bis 90 % der Fasern der ersten Lage in Faserbündeln aus mindestens zwei Fasern angeordnet.

Die Faserbündel sorgen für eine erhöhte Steifigkeit der ersten Lage Vlies, wodurch sich die Plissierfähigkeit derselbigen verbessert. Ferner sorgen die Faserbündel auch für eine höhere innere Stabilität der ersten Lage Vlies, wodurch diese auch bei hohen Anströmgeschwindigkeiten nicht kollabiert. Die Offenporigkeit und somit ein geringer Differenzdruck des Vlieses werden auf diese Weise gewährleistet.

In einer weiteren bevorzugten Ausgestaltung weist die erste Lage einer Volumendichte zwischen 0,01 g/cm³ und 0,12 g pro cm³, bevorzugt zwischen 0,03 g/cm³ und 0,1 g/cm³ und am bevorzugten von 0,07 g pro cm³ auf.

Durch die geringe Dichte wird der haptische Effekt der Flauschigkeit des Vlieses der ersten Lage verstärkt, wodurch die elektrostatische Kapazität weiterhin erhöht wird, der Differenzdruck wird auf einen niedrigen Niveau gehalten.

In einer weiteren bevorzugten Ausgestaltung weisen die Fasern der ersten Lage überwiegend eine Faserstärke von 3 µm bis 10 µm und bevorzugt von 4 µm bis 5 µm auf.

Durch die vergleichsweise große Faserstärke, z. B. im Vergleich zu einem Filtermedium mit Nanofasern, ist das erfindungsgemäße Filtermedium relativ einfach herzustellen. Die Sprühdüsen in einem Spinnbalken für die größere Faserstärke sind wesentlich weniger anfällig und auch sonstige Störfaktoren sind bei einem Produktionsprozess für Fasern in einer größeren Faserstärke von weniger Einfluss.

Erfindungsgemäß weist das Filtermedium eine zweite Lage Vlies zur Stabilisierung, insbesondere zur Herstellung der Plissierfähigkeit, auf.

Aufgrund der Weichheit der geringen Dichte der ersten Lage kann es bei gewissen Anwendungen notwendig sein, das Filtermedium mit dieser zweiten Lage zu versehen. Die zweite Lage braucht keine oder zumindest nur geringfügige Filtereigenschaften aufweisen. Primär dient diese zur Stabilisierung der ersten Lage des Filtermediums.

Dies drückt sich auch dadurch aus, dass die zweite Lage in einer weiteren bevorzugten Ausführungsform eine höhere Volumendichte (insbesondere) bevorzugt von 0,12 bis 0,2 g/cm³ und noch bevorzugten 0,15 bis 0,18 g/cm³ aufweist.

In einer weiteren vorteilhaften Ausgestaltung sind Fasern der ersten Lage Vlies und Fasern der zweiten Lage Vlies in einer Grenzschicht miteinander verschränkt.

Durch die Verschränkung der Fasern, welche vorzugsweise schon während dem Urformprozess erreicht wird, haften erste und die zweite Lage ohne jedes weitere Hilfsmittel aneinander.

Erfindungsgemäß weist die zweite Lage dickere Fasern als die erste Lage, insbesondere mit einer Faserstärke von 7 µm bis 25 µm, bevorzugt 10 µm bis 20 µm und besonders bevorzugt 15 µm bis 18 µm, auf.

Durch die dickeren Fasern weist die zweite Lage eine höhere Stabilität auf.

In einer weiteren vorteilhaften Ausgestaltung kommen für das synthetische erste und/oder zweite Polymer zumindest ein Polymer, insbesondere ein Polyester, ausgewählt aus der Gruppe Polyethylen (PE), Polyethylenterephthalat (PET), Polycarbonat (PC), Polyamid (PA), Polybutylenterephthalat (PBT), Polypropylen (PP) und/oder Polyvinylchlorid (PVC) in Frage.

In einer weiteren vorteilhaften Ausgestaltung sind 50 % bis 100%, bevorzugt 80 % bis 100% und besonders bevorzugt 80 % bis 90% der Fasern der ersten Lage und/oder zweiten Lage in Faserbündeln aus mindestens zwei Fasern angeordnet sind.

Erfindungsgemäß weist die erste Lage Faserbündel aus Fasern verschiedener synthetischer Polymere auf. In einer weiteren vorteilhaften Ausgestaltung weist die zweite Lage Faser-bündel aus Fasern verschiedener synthetischer Polymere auf.

Durch das Bilden von Bündeln aus Fasern verschiedener synthetischer Polymere kann die elektrostatische Kapazität des Materials weiterhin erhöht werden.

In einer weiteren vorteilhaften Ausgestaltung sind die einzelnen Fasern und/oder die Faserbündel der ersten Lage und/oder zweiten Lage überwiegend parallel angeordnet.

In einer weiteren vorteilhaften Ausgestaltung ist die erste Lage und/oder die zweite Lage hydrophob.

In einer weiteren vorteilhaften Ausgestaltung ist die erste Lage und/oder zweite Lage in der Weise ausgebildet, dass das Filtermedium einen Differenzdruck von weniger als 70 Pa, bevorzugt von weniger als 60 Pa aufweist.

Erfindungsgemäß können auch mehrere der oben beschriebenen Ausgestaltungen der Erfindung beliebig miteinander kombiniert werden.

Obige sowie weitere Vorteile, Merkmale und Anwendungsmöglichkeiten der vorliegenden Erfindung ergeben sich aus den nachfolgenden Beschreibungen der bevorzugten Ausführungsbeispiele anhand der Zeichnungen. In diesen wird wie folgt dargestellt:
Figur 1 ist eine teilweise schematische Darstellung eines Querschnitts durch ein Filtermedium gemäß einer Ausführungsform;
Figur 2a ist ein Rasterelektronenmikroskop-Bild und Figur 2b ist eine teilweise schematische Darstellung eines Querschnitts durch ein Filtermedium gemäß einer zweiten Ausführungsform der Erfindung;
Figur 3a ist ein Rasterelektronenmikroskop-Bild und Figur 3b ist eine teilweise schematische Darstellung eines plissierten Filtermediums gemäß der zweiten Ausführungsform der Erfindung;
Figur 4a ist ein Rasterelektronenmikroskop-Bild und Figur 4b ist eine teilweise schematische Darstellung einer Elektronenmikroskopaufnahme einer ersten Lage Vlies;
Figur 5 ist eine schematische Darstellung einer Elektronenmikroskopaufnahme einer ersten Lage Vlies;
Figur 6a ist ein Rasterelektronenmikroskop-Bild und Figur 6b ist eine teilweise schematische Darstellung einer Elektronenmikroskopaufnahme einer ersten Lage Vlies;
Figur 7a ist ein Rasterelektronenmikroskop-Bild und Figur 7b ist eine teilweise schematische Darstellung einer Elektronenmikroskopaufnahme eines Querschnitts durch ein Filtermedium gemäß der zweiten Ausführungsform der Erfindung;
Figur 8 ist eine schematische Darstellung einer Elektronenmikroskopaufnahme einer zweiten Lage Vlies gemäß der vorliegenden Erfindung.

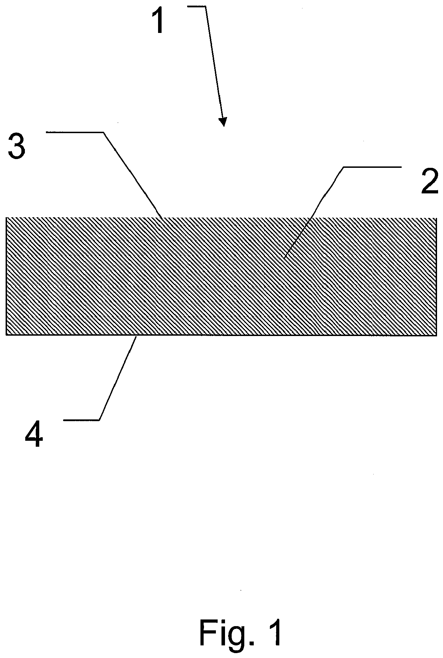

Bezug nehmend auf Figur 1 wird ein Filtermedium 1 näher erläutert.

Das erfindungsgemäße Filtermedium 1 weist eine erste Lage Vlies 2 auf, welche mittels eines Schmelz-Spinn-Verfahrens hergestellt ist. Die erste Lage Vlies 2 besteht bevorzugt aus einem Polymer mit einem Melt-Flow-Index von 20 - 200, bevorzugt von 40 - 100 und noch bevorzugter von 60. Der Melt-Flow-Index wird dabei nach der DIN EN ISO 1133 bestimmt.

Vorzugsweise werden für die Bestimmung des MFI-Indexes einiger Kunststoffe die folgenden typischen Prüfbedingungen verwendet:

| | **Prüflast/kg** | | | | | | |
|---|---|---|---|---|---|---|---|
| **Prüftemperatur/°C** | **0,325** | **1,2** | **2,16** | **3,8** | **5** | **10** | **21,6** |
| **125** | EVA | | | | | | |
| **150** | | | EVA | | | | |
| **190** | | | PE | | PE | | PE |
| | | | EVA | | | | |
| | | | POM | | PP | | WPC |
| **200** | | | | | PS | | |
| **220** | | | | | | ABS | |
| | | | | | | SAN | |
| | | | | | | ASA | |
| **230** | | | PP | PMMA | PP | | |
| | | | | PMMI | PVDF | | |
| **235** | | | PA-12 | | PA-12 | PA-11 | |
| | | | PA-11 | | PA-11 | | |
| **250** | | | PBT | | | | |
| **260** | | | PBT | | PMP | | PMMI |
| **275** | | | | | PA | | |
| **280** | | PPE/PS | PET | PPE/PS | PPE/PS | | |
| | | | PPE/PS | | | | |
| **300** | | PC | PPE/PS | | PA-GF | PPE/PS | |
| | | | | | PPE/PS | | |
| **315** | | | | | PPS | | |
| **330** | | | PC | | | PA6T | |
| **340** | | | PC | | | PEI | |
| **343** | | | PSU | | | | |
| **360** | | | | | | PES | |
| | | | | | | PPSU | |
| | | | | | | PSU | |
| **400** | | | PES | | | | |
| | | | PPSU | | | | |
| | | | PEEK | | | | |

Der Melt-Flow-Index wird dabei vorzugsweise über die Schmelze-Massefließrate mit der Einheit g/10min bestimmt.

Eine erste Oberfläche 3 des Vlieses weist vorzugsweise eine flauschige bzw. weiche Oberfläche auf. Dies bedeutet, dass die Oberfläche 3 eine große "Softness" aufweist. Diese "Softness" kann über die Weichheit, die Elastizität, die Kompressibilität, die Bestfestigkeit mit einem Durchstoßkörper nach DIN ISO 12625-9, die Dicke nach DIN ISO 12625-3, die Massenbelegung nach DIN ISO 12625-6:2005, die Abrasion und/oder die Zugfestigkeit nach einem Tensile-Test nach DIN 12625-4 charakterisiert werden. Vorzugsweise kann die flauschige Haptik auch durch eine Testperson bestimmt werden, die die Oberflächenstruktur der ersten Oberfläche 3 erfühlt. Auch die zweite Oberfläche 4 der ersten Lage 2 weist vorzugsweise eine flauschige Haptik auf. Besonders vorzugsweise ist die zweite Oberfläche 4 jedoch eher glatt, da bei einem Schmelz-Spinn-Verfahren zur Herstellung des Filtermediums 1 üblicherweise die erste Lage 2 auf der zweiten Oberfläche 4 abgelegt wird, wodurch diese die Form des Substrats annimmt

Die Volumendichte der ersten Lage 2 beträgt vorzugsweise zwischen 0,01 und 0,12 g/ cm³; besonders bevorzugt zwischen 0,03 und 0,10 g/cm³ und am bevorzugtesten 0,07 g/cm³. Dies ist für ein Filtermedium 1 der genannten Art eine eher geringe Dichte.

Die Faserstärke der Fasern der ersten Lage beträgt bevorzugt 3 µm bis 10 µm und besonders bevorzugt 4 µm bis 5 µm. Durch die relativ geringe Faserstärke der ersten Lage 2 wird eine ausreichend große Oberfläche der Fasern erreicht, um eine elektrostatische Kapazität der ersten Lage 2 zu gewährleisten. Vorzugsweise beträgt die Abscheideleistung der ersten Lage Vlies 2 vor Aufbringung der Ladung im Wesentlichen 5% bis 50%, bevorzugt 10% bis 30%, bevorzugter 15% bis 20% und nach Aufbringung der statischen Ladung im Wesentlichen 50% bis 95%, bevorzugter 60% bis 90%, noch bevorzugter 70 bis 80% und am bevorzugtesten 75%. Weiter vorzugsweise weist die erste Lage Vlies 2 eine Massenbelegung (Flächengewicht) von etwa 35 g/m² bis 60 g/m², bevorzugt von etwa 40 g/m² bis 55 g/m², besonders bevorzugt etwa von 45 g/m² bis 50 g/m² und am bevorzugtesten etwa von 47,5 g/m² auf. Weiter vorzugsweise weist die erste Lage Vlies 2 eine Dicke etwa von 0,4 mm bis 0,7 mm, bevorzugt etwa von 0,5 mm bis 0,6 mm und am bevorzugtesten von etwa 0,55 mm auf. Weiter vorzugsweise weist die erste Lage Vlies 2 eine Luftdurchlässigkeit etwa von 800 l/m²s bis 1300 l/m²s, bevorzugt etwa von 900 l/m²s bis 1200 l/m²s und am bevorzugtesten etwa von 1000 l/m²s auf. Weiter vorzugsweise weist erste Lage Vlies 2 eine durchschnittliche Porengröße von mehr als 10 µm bis 60 µm, bevorzugt von 20 µm bis 50 µm, bevorzugter von 30 µm bis 40 µm und am bevorzugtesten von 35 µm auf. Weiter vorzugsweise wird die erste Lage Vlies 2 mit einer Verarbeitungstemperatur des Polymers etwa von 230°C bis 280°C, bevorzugt etwa von 240°C bis 270°C und am bevorzugtesten etwa von 250°C bis 260°C hergestellt.

Die jeweiligen Grenzwerte geben nur einen ungefähren Bereich wieder und auch benachbarte Werte zu den angegebenen Werten sind für eine Ausführung möglich.

Insbesondere mit einer Corona-Entladung oder einem triboelektrischen Verfahrensschritt wird auf die erste Lage Vlies 2 vorzugsweise eine elektrostatische Ladung aufgebracht.

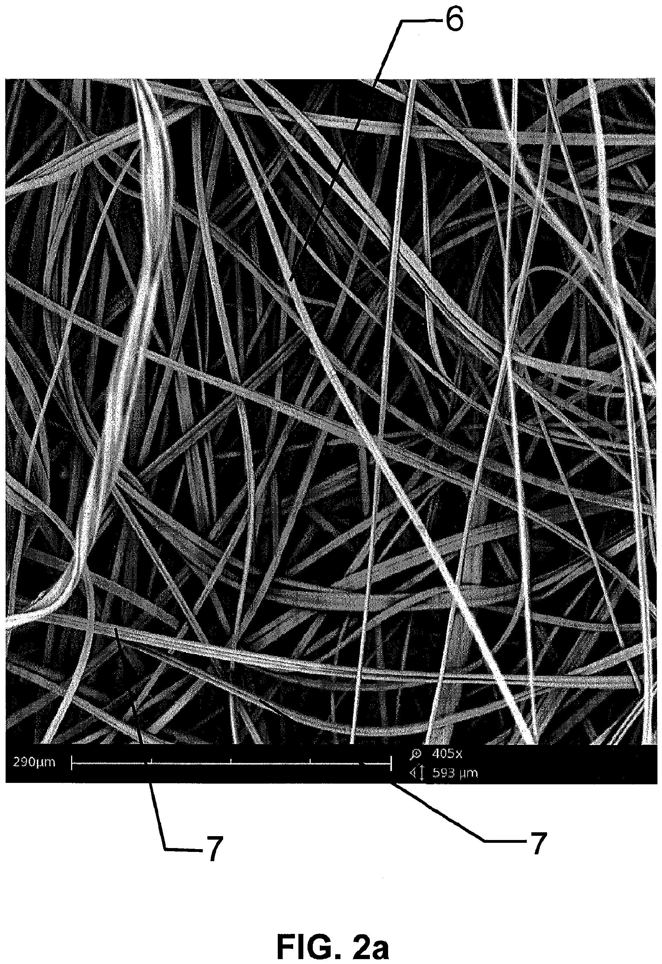

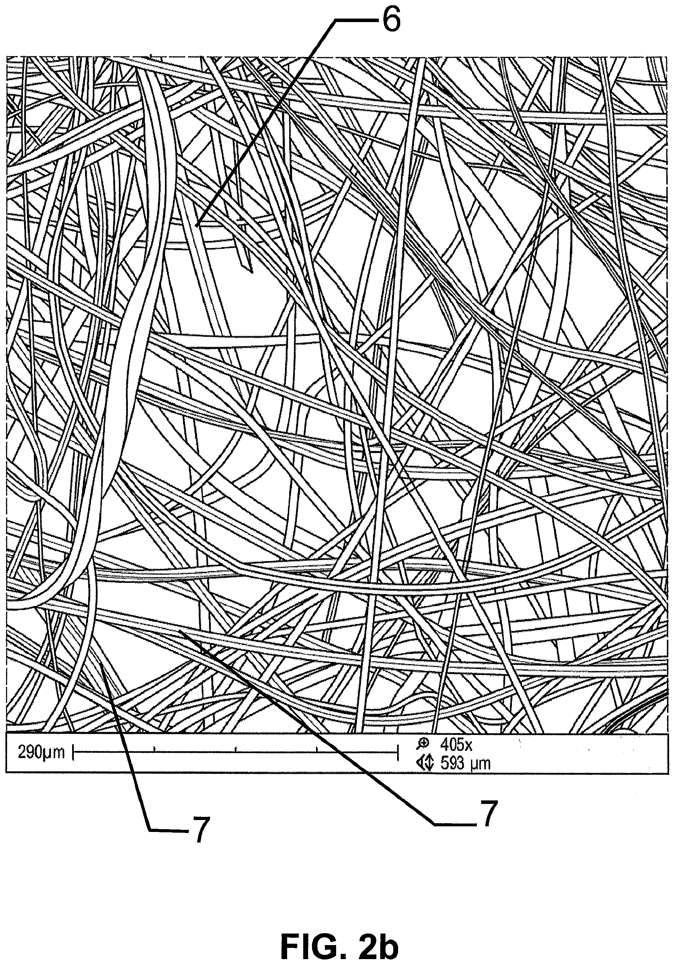

Bezug nehmend auf die Figuren 2a und 2b wird die Struktur der ersten Lage 2, vergrößert unter dem Elektronenmikroskop, schematisch dargestellt. Die einzelnen Fasern 6 sind demnach bevorzugt größtenteils in Faserbündeln 7 angeordnet. Die Abstände der Fasern 6 bzw. der Faserbündeln 7 voneinander ist relativ groß, so dass sich große Zwischenräume zwischen den Fasern ergeben. Ein Großteil der Faserbündel 7 besteht aus zwei bis vier Fasern, wobei auch mehr Fasern ein Faserbündel ausmachen können. Bevorzugt sind 80 % bis 100 %, besonders bevorzugt 80 % bis 90 % der Fasern in Faserbündeln angeordnet. In einer Ausführungsform bestehen alle Fasern 6 aus einem Polymer. In einer weitern Ausführungsform sind Fasern aus unterschiedlichen Polymeren vorhanden. In einer weiteren bevorzugten Ausführungsform sind Faserbündel 7 vorhanden, die aus Fasern 6 unterschiedlicher Polymere und/oder Polymergemische bestehen. In Versuchen hat sich gezeigt, dass insbesondere Polypropylen besonders gut für die erste Lage geeignet ist, welches einen MFI gemäß der oben genannten Werte aufweist.

Die Faserbündel 7 entstehen in dem Urformprozess des Schmelz-Spinn-Verfahrens durch enges Anordnen der Sprühdüsen.

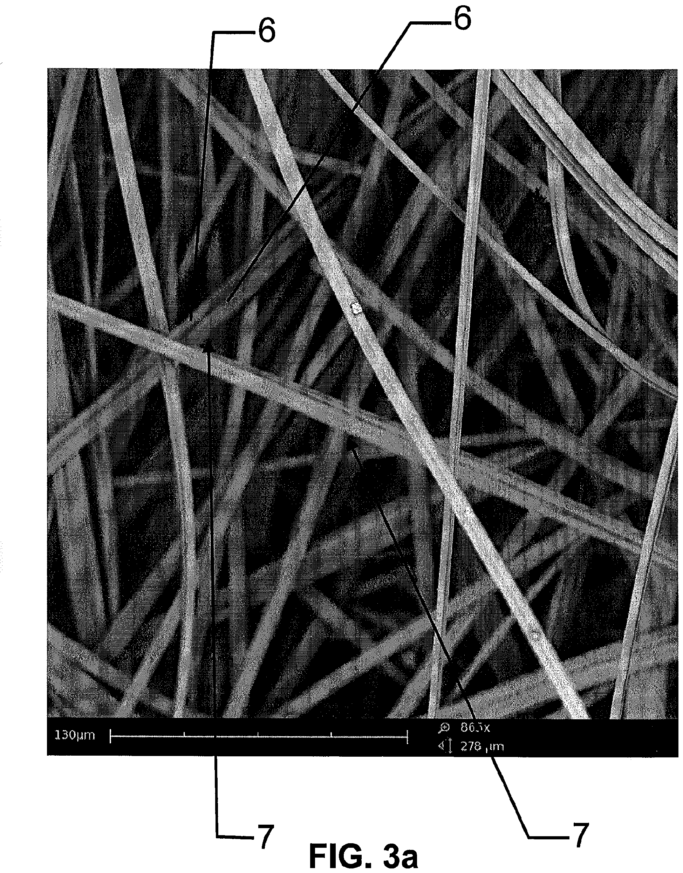

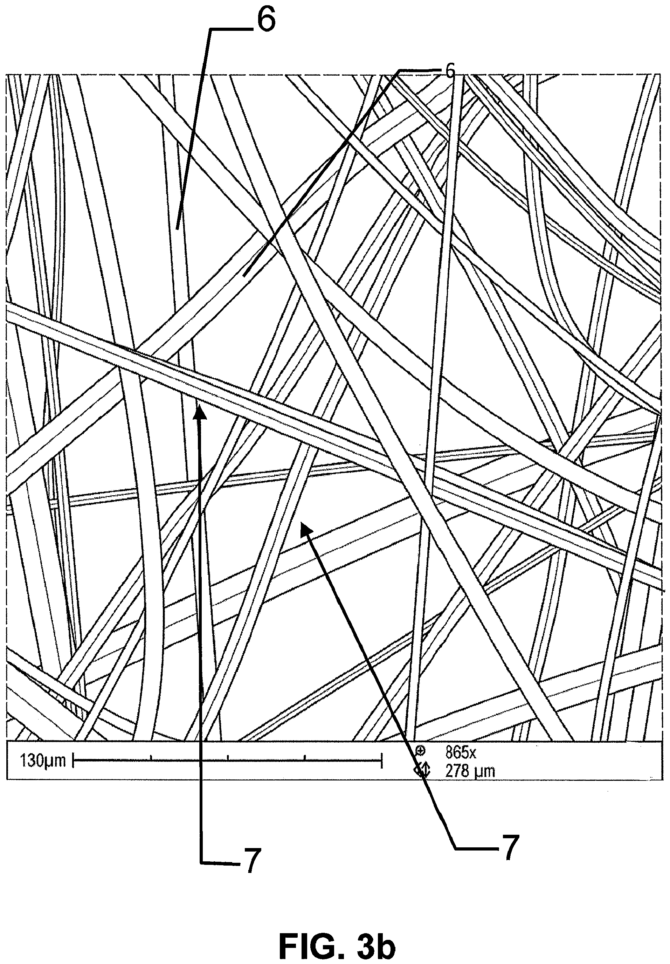

Bezug nehmend auf die Figuren 3a und 3b wird eine erste Lage 2 unter einem Elektronenmikroskop noch einmal vergrößert dargestellt. Der Vergrößerungsmaßstab ist in der Figuren 3a und 3b höher wie in den Figuren 2a und 2b. Wiederum sind die einzelnen Fasern 6 sowie die Faserbündel 7 aus mindestens zwei Fasern und bevorzugt aus zwei bis vier Fasern deutlich erkennbar.

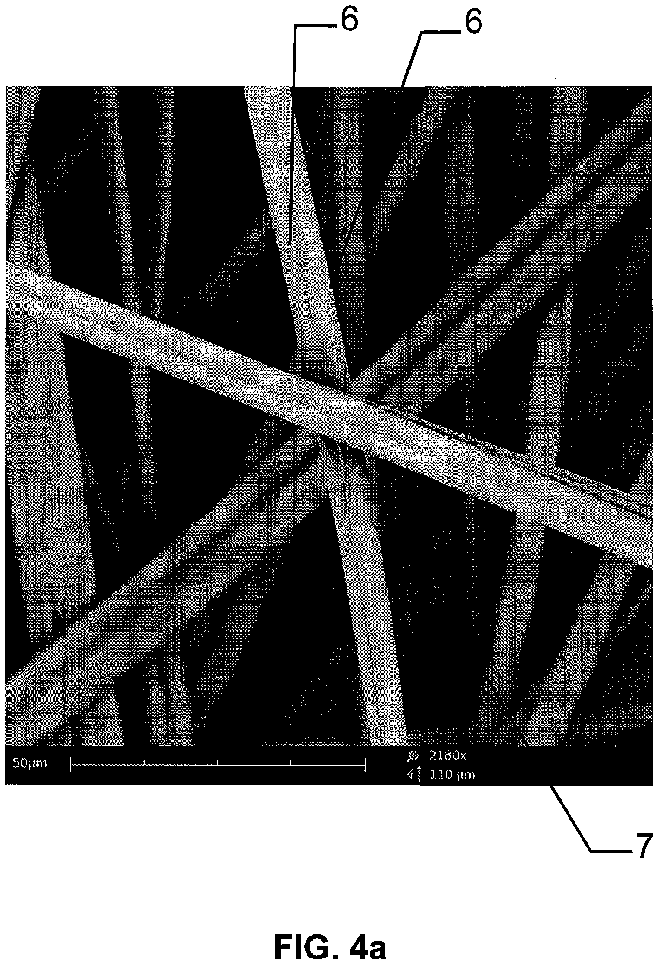

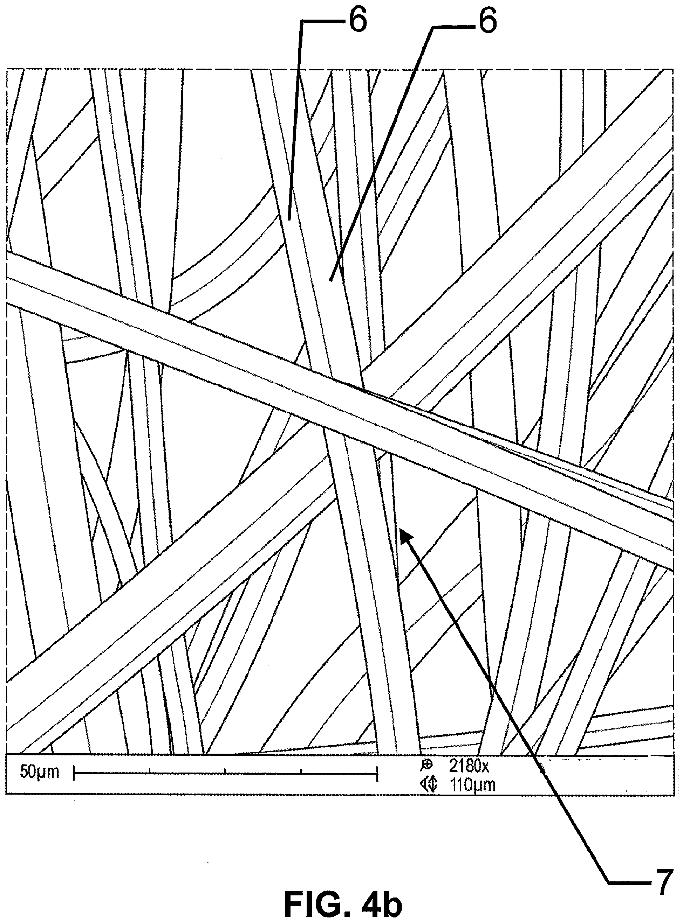

Figur 4a zeigt ein Rasterelektronenmikroskop-Bild und Figur 2b eine schematische Darstellung einer Vergrößerung unter dem Rasterelektronenmikroskop der ersten Lage 2 mit nochmals stärkerer Vergrößerung. Auch hier sind die Faserbündel und die Fasern deutlich erkennbar.

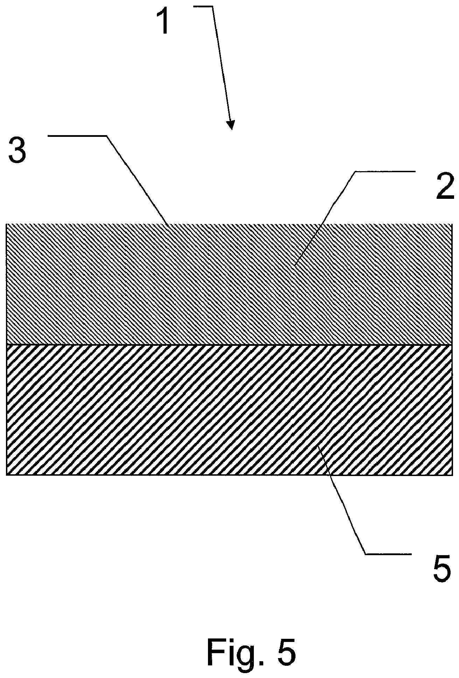

Bezug nehmend auf Figur 5 wird ein Filtermedium gemäß einer Ausführungsform der Erfindung näher erläutert. Das Filtermedium 1 umfasst nunmehr eine erste Lage 2 und eine zweite Lage 5. Die Ausgestaltungen der zweiten Ausführungsform können, soweit technisch möglich, mit denen der ersten Ausführungsform beliebig kombiniert werden.

Vorzugsweise sind die Fasern der zweiten Lage Vlies in einer Grenzschicht miteinander verschränkt. Die Verschränkung entsteht dabei beim Urform-Herstellungsprozess. Dabei werden die einzelnen Lagen aus verschiedenen Spinnbalken auf ein sich in Querrichtung zu diesen bewegendes Substrat gesprüht. Werden die Strahlen unmittelbar nacheinander oder sogar ineinander gesprüht, ergibt sich eine Grenzschicht, in der sich Fasern beider Lagen in verschiedener Konzentration vorliegen und in welche die Fasern vermengt und verwirbelt sind.

Die erste Lage 2 und die zweite Lage 5 bestehen bevorzugt jeweils aus einem synthetischem Polymer, aus zumindest einem Polymer aus der Gruppe Polyethylen (PE), Polyethylenterephthalat (PET), Polycarbonat (PC), Polyamid (PA), Polybutylenterephthalat (PBT), Polypropylen (PP), Polyester und/oder Polyvinylchlorid (PVC).

Die Fasern können aus ein und demselben synthetischen Polymer oder aus verschiedenen Polymeren oder jeweils aus Mischungen verschiedener Polymere bestehen.

Die zweite Lage 5 des Filtermediums 1 weist bevorzugt eine Volumendichte von 0,12 bis 0,20 g/cm³; bevorzugter von 0,15 bis 0,18 g/cm³ und somit bevorzugt eine höhere Dichte als die erste Lage 2 auf. Auch sind die Fasern 8 der zweiten Lage 5 bevorzugt dicker als die Fasern 6 der ersten Lage 2 und weisen bevorzugt eine Faserstärke von 7 µm bis 25 µm, noch bevorzugter von 10 µm bis 20 µm und besonders bevorzugt von 15 µm bis 18 µm auf.

Die jeweiligen Grenzwerte geben nur einen ungefähren Bereich wieder und auch benachbarte Werte zu den angegebenen Werten sind für eine Ausführung möglich.

Die zweite Lage 5 weist bevorzugt keine elektrostatische Ladung auf. Besonders bevorzugt wird jedoch auf die zweite Lage 5 eine elektrostatische Ladung aufgebracht. Dies geschieht bevorzugt in demselben Schritt des Herstellungsprozesses wie die Aufladung der ersten Lage 2, besonders bevorzugt auch durch Corona-Entladung oder ein triboelektrisches Verfahren.

Die erste Lage 2 und/oder die zweite Lage 5 des Filtermediums 1 sind hydrophob.

Insbesondere ist das Filtermedium 1 bevorzugt auswaschbar, wodurch dieses regeneriert werden kann.

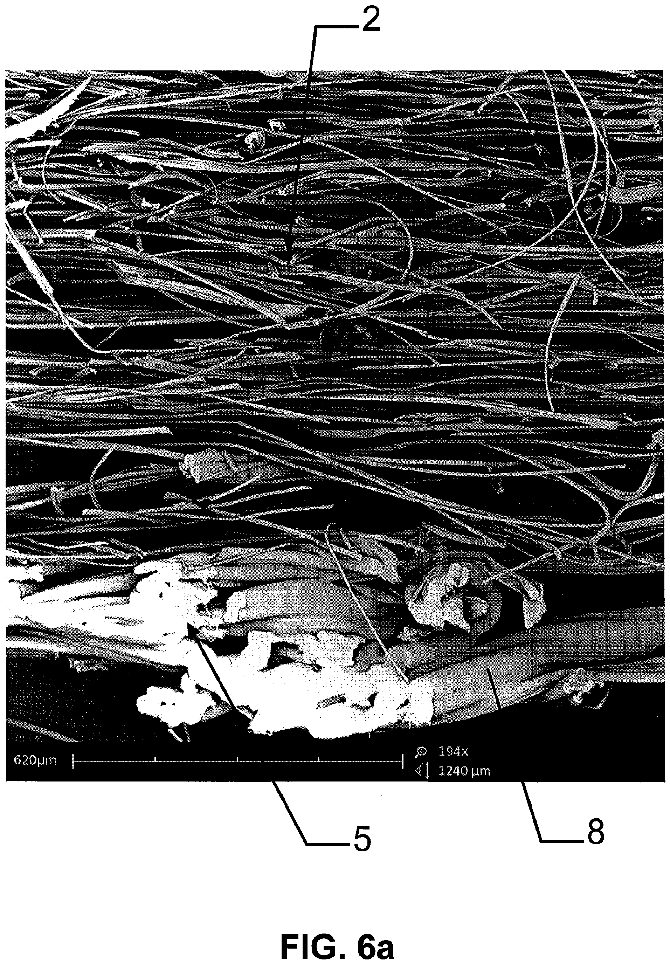

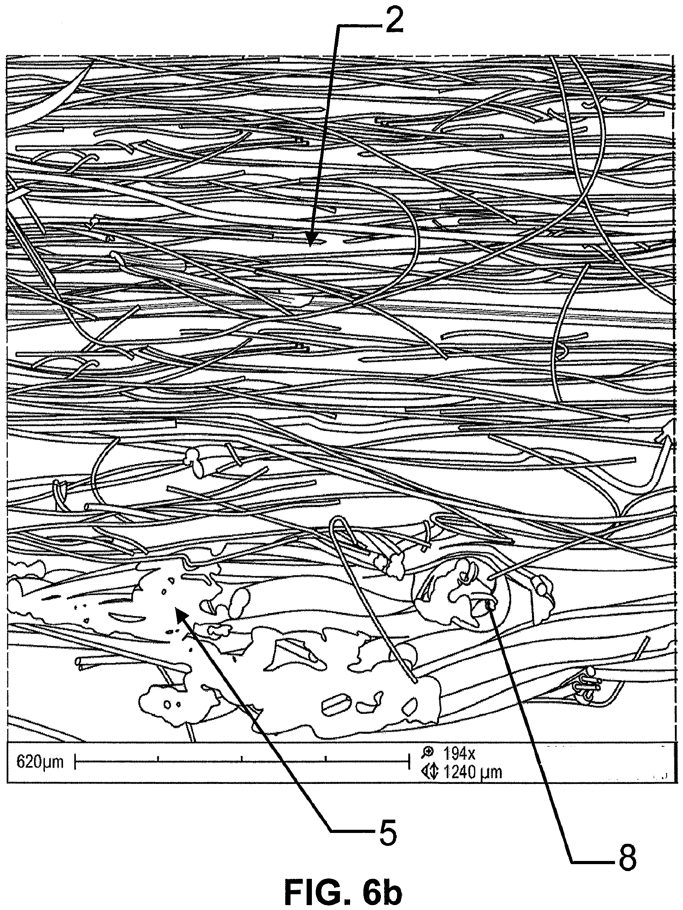

Bezug nehmend auf die Figuren 6a und 6b wird ein Rasterelektronenmikroskop-Bild und ein Schema einer Rasterelektronenmikroskop-Aufnahme des Filtermediums 1 gemäß der zweiten Ausführungsform der Erfindung dargestellt. Deutlich erkennbar sind die erste Lage 2 und die zweite Lage 5. Die Fasern der einzelnen Lagen sind überwiegend in die gleiche Richtung senkrecht zur Oberfläche des Filtermediums 1 angeordnet. Diese Ausrichtung der Fasern 6 der ersten Lage 2 und der Fasern 8 der zweiten Lage 5 ergibt sich insbesondere aus der Geschwindigkeit eines Transportbandes bzw. Substrats, auf welchem das/die Polymere im Urformprozess des Filtermediums 1 abgelegt wird/werden. Auch die zweite Lage 5 weist Faserbündel 9 auf, die aus mehreren Fasern 8 der zweiten Lage 5 gebildet werden. Sowohl die Fasern 6 der ersten Lage 2 als auch die Fasern 8 der zweiten Lage 2 sind zur Bildung von Faserbündeln 7, 9, bevorzugt locker, zusammengelegt und noch bevorzugter miteinander verbunden. Die Verbindung entsteht dabei bevorzugt schon im Urformprozess. Es ist auch möglich, dass einzelne Fasern 6, 8 eines Faserbündels 7, 9 teilweise miteinander verbunden, teilweise nur locker zusammenliegen und teilweise bzw. abschnittsweise voneinander getrennt sind. Die Verbindung der Fasern 6, 8 zu Faserbündeln 7, 9 kann auch in einem späteren Verfahrensschritt erfolgen, insbesondere durch Erhitzung.

In einem Zwischenbereich 10 zwischen der ersten Lage 2 und der zweiten Lage 5 sind Fasern der ersten Lage 2 mit Fasern der zweiten Lage 5 vorzugsweise verschränkt und/oder verbunden, so dass die erste Lage 2 und die zweite Lage 5 aneinander haften.

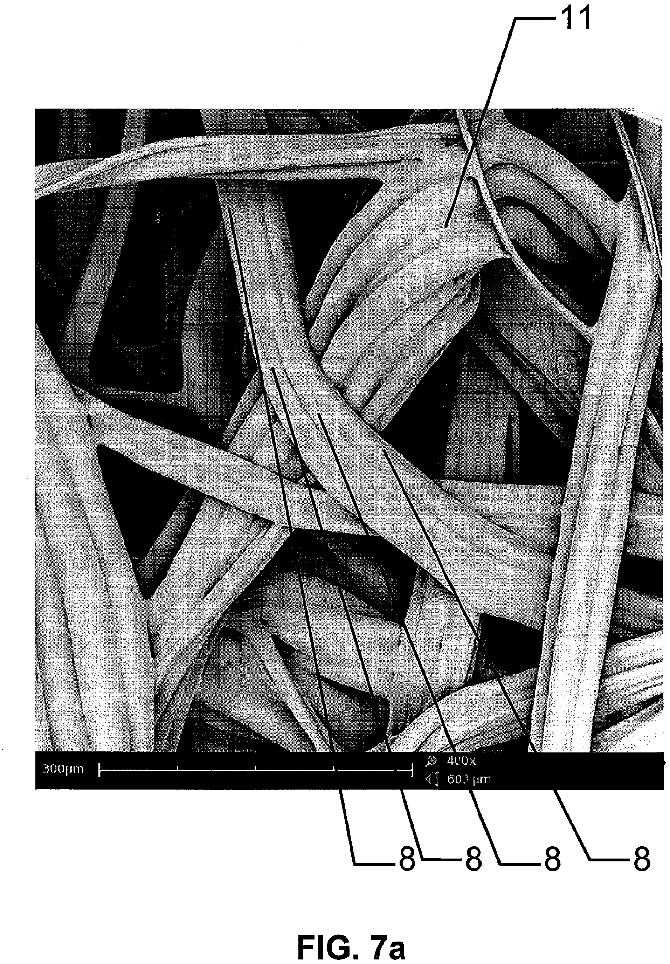

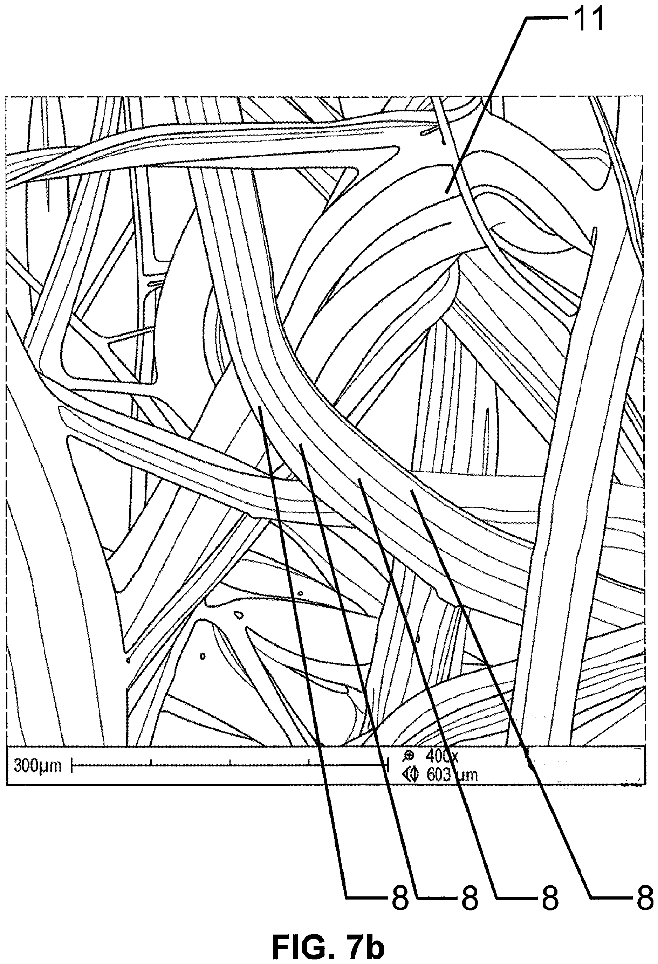

In Bezug auf die Figuren 7a und 7b wird eine schematische Vergrößerung der zweiten Lage 5 und ein Schema derselben Vergrößerung unter dem Rasterelektronenmikroskop dargestellt. Deutlich erkennbar sind die Faserbündel 9 aus zwei oder mehr Fasern der zweiten Lage 5, 8. Ferner sind gegenüber der ersten Lage 2 vermehrt Knotenpunkte 11 erkennbar, in denen einzelne Faserbündel 9 zusammentreffen und bevorzugt miteinander verbunden sind. Bevorzugt bestehen 80 % bis 100 %, besonders bevorzugt 80 % bis 90 % der Fasern der ersten Lage 2 und/oder der zweiten Lage 5 aus Faserbündeln aus mindestens zwei Fasern. Die zweite Lage 5 dient insbesondere dazu, um das Filtermedium 1 zu stabilisieren. Dies wird durch die dickeren Fasern 8 erreicht.

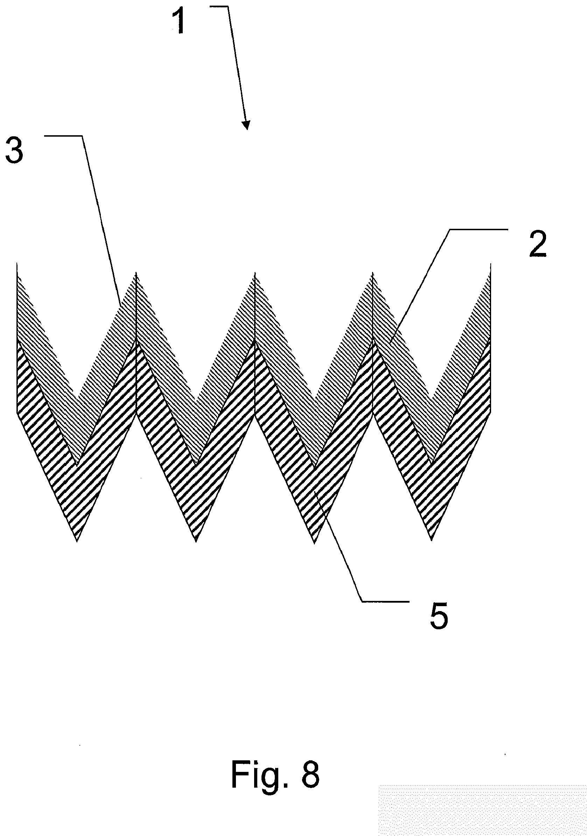

Insbesondere wird durch die Stabilisierung des Filtermediums 1 erreicht, dass das Filtermedium 1, wie in Figur 8 dargestellt, plissierbar wird. Die zweite Lage 5 stützt hierbei die erste Lage 2.

Bevorzugt weist die zweite Lage 5 keine oder nur geringe Filterwirkung auf, wohingegen die erste Lage 2 bevorzugt hauptsächlich für die Filterwirkung des Filtermediums 1 verantwortlich ist. In einer anderen bevorzugten Ausführungsform dienen jedoch beide Lagen 2, 5 als Filtermaterialien, wobei die Lagen 2, 5 bevorzugt in der Weise ausgestaltet sind, dass jeweils verschiedene Partikelgrößen gefiltert werden können.

Das entstehende Filtermedium 1 weist ohne elektrostatische Ladung eine Abscheideleistung von vorzugsweise etwa 5 % bis 20 % und mit elektrischer Ladung eine Abscheideleistung von vorzugsweise etwa 60 % bis 90 % auf. Dies ist für beide Ausführungsformen eine überraschend hohe Abscheideleistungsdifferenz mit und ohne elektrostatische Ladung und basiert insbesondere auf der Struktur der ersten Lage 2. Vorzugsweise sind beide dargestellten Ausführungsformen elektrostatisch regenerierbar, d.h. auf das Filtermedium 1 kann nach Verlust der elektrostatischen Ladung wieder eine elektrostatische Ladung aufgebracht werden. Die Abscheideleistung der zweiten Lage 5 läge ohne die erste Lage 2 hingegen nur bei etwa 40 %.

Die Abscheideleistung wird hierbei nach gängigen Messverfahren bestimmt. Bevorzugt wird die Abscheideleistung mit Natriumchloridpartikeln von 0,4 µm bei einer Anströmgeschwindigkeit von V = 0,14 m/sek. bestimmt.

Bezugnehmend auf Figur 8 wird ein plissiertes Filtermedium 1 schematisch dargestellt. Aufgrund der Stabilisierung durch die zweite, steifere Lage 5 lässt sich das Filtermedium 1 gut falten und die erste Oberfläche 3 dient bevorzugt als angeströmte Filteroberfläche.

Auch in Randbereichen der jeweiligen Bereichsangaben kann die erfindungsgemäße Wirkung erreicht werden. Darüber hinaus sind alle genannten Parameterwerte Durchschnittswerte, welche an einzelnen Stellen der jeweiligen Lagen signifikant abweichen können.

### Bezugszeichenliste:

| | |
|---|---|
| Filtermedium | 1 |
| Erste Lage Vlies | 2 |
| Erste Oberfläche | 3 |
| Zweite Oberfläche | 4 |
| Zweite Lage Vlies | 5 |
| Faser (erste Lage) | 6 |
| Faserbündel (erste Lage) | 7 |
| Faser (zweite Lage) | 8 |
| Faserbündel (zweite Lage) | 9 |
| Zwischenbereich | 10 |
| Knotenpunkt | 11 |

## Patentansprüche

1. Filtermedium (1) aus einem ersten synthetischen Polymer, aufweisend
eine erste Lage Vlies (2), welche mittels eines Schmelz-Spinn-Verfahrens hergestellt ist, wobei auf die erste Lage Vlies (2) eine elektrostatische Ladung aufbringbar ist, und
eine zweite Lage Vlies (5) zur Stabilisierung aus dem ersten und/oder einem zweiten Polymer, insbesondere zur Herstellung der Plissierfähigkeit,
wobei das erste synthetische Polymer einen Melt-Flow-Index von 20 bis 200, bevorzugt von 40 bis 100 und noch bevorzugter von 60 aufweist, bestimmt nach der DIN EN ISO 1133, wobei die zweite Lage (5) dickere Fasern (8) als die erste Lage (2) aufweist und wobei die erste Lage (2) Faserbündel aus Fasern verschiedener synthetischer Polymere aufweist.

2. Filtermedium (1) nach einem der vorhergehenden Ansprüche, wobei die erste Lage Vlies (2) eine Massenbelegung von etwa 35 bis 60 g/m², bevorzugt von etwa 40 g/m² bis 55 g/m², besonders bevorzugt etwa von 45 bis 50 g/m² und am bevorzugtesten etwa von 47,5 g/m² aufweist.

3. Filtermedium (1) nach einem der vorhergehenden Ansprüche, wobei die erste Lage Vlies (2) eine Luftdurchlässigkeit etwa von 800 l/m²s bis 1300 l/m²s, bevorzugt etwa von 900 l/m²s bis 1200 l/m²s und am bevorzugtesten etwa von 1000 l/m²s aufweist.

4. Filtermedium (1) gemäß einem der vorhergehenden Ansprüche, wobei die erste Lage eine Volumendichte zwischen 0,01 g/cm³ und 0,12 g/cm³, bevorzugt zwischen 0,03 g/cm³ und 0,10 g/cm³ und am bevorzugtesten von 0,07 g/cm³ aufweist.

5. Filtermedium (1) gemäß einem der vorhergehenden Ansprüche, wobei die Fasern (6) der ersten Lage (2) eine Faserstärke von 3 µm bis 10 µm und bevorzugt von 4 µm bis 5 µm aufweisen.

6. Filtermedium (1) gemäß Anspruch 1, wobei Fasern der ersten Lage Vlies (2) und Fasern (6, 8) der zweiten Lage Vlies (5) in einer Grenzschicht miteinander verschränkt sind.

7. Filtermedium (1) gemäß einem der Ansprüche 1 bis 6, wobei die zweite Lage Vlies (5) eine höhere Volumendichte als die erste Lage (2), insbesondere von 0,12 g/cm³ bis 0,20 g/cm³, bevorzugter 0,15 g/cm³ bis 0,18 g/cm³ aufweist.

8. Filtermedium (1) gemäß einem der Ansprüche 1 bis 7, wobei die zweite Lage (5) Fasern (8) mit einer Faserstärke von 7 µm bis 25 µm, bevorzugt 10 µm bis 20 µm und besonders bevorzugt 15 µm bis 18 µm aufweist.

9. Filtermedium (1) gemäß einem der vorhergehenden Ansprüche, wobei das synthetische erste und/oder zweite Polymer aus zumindest einem Polymer aus der Gruppe Polyethylen (PE), Polyethylenterephthalat (PET), Polycarbonat (PC), Polyamid (PA), Polybutylenterephthalat (PBT), Polypropylen (PP), Polyester und/oder Polyvinylchlorid (PVC) besteht.

10. Filter mit einem Filtermedium gemäß einem der vorhergehenden Ansprüche.

## Claims

1. Filter medium (1) made of a first synthetic polymer, comprising
a first layer of fleece (2), which is produced by means of a melt-spinning process, wherein an electrostatic charge is applicable to the first layer of fleece (2),
and
a second layer of fleece (5) for stabilization made from the first and/or a second polymer, in particular for producing the pleatability,
wherein the first synthetic polymer has a melt flow index of 20 to 200, preferably of 40 to 100 and more preferably of 60, determined according to DIN EN ISO 1133, wherein the second layer (5) comprises thicker fibres (8) than the first layer (2) and wherein the first layer (2) comprises fibre bundles of fibres of different synthetic polymers.

2. Filter medium (1) according to one of the preceding claims, wherein the first layer of fleece (2) has a mass coverage of about 35 to 60 g/m2, preferably of about 40 g/m2 to 55 g/m2, particularly preferably of about 45 to 50 g/m2 and most preferably of about 47.5 g/m2.

3. Filter medium (1) according to one of the preceding claims, wherein the first layer of fleece (2) has an air permeability of about 800 l/m2s to 1300 l/m2s, preferably of about 900 l/m2s to 1200 l/m2s and most preferably of about 1000 l/m2s.

4. Filter medium (1) according to one of the preceding claims, wherein the first layer has a volume density between 0.01 g/cm3 and 0.12 g/cm3, preferably between 0.03 g/cm3 and 0.10 g/cm3 and most preferably of 0.07 g/cm3.

5. Filter medium (1) according to one of the preceding claims, wherein the fibres (6) of the first layer (2) have a fibre thickness of 3 µm to 10 µm and preferably of 4 µm to 5 µm.

6. Filter medium (1) according to claim 1, wherein fibres of the first layer of fleece (2) and fibres (6, 8) of the second layer of fleece (5) are entangled with one another in a boundary layer.

7. Filter medium (1) according to one of claims 1 to 6, wherein the second layer of fleece (5) has a higher volume density than the first layer (2), in particular from 0.12 g/cm3 to 0.20 g/cm3, more preferably 0.15 g/cm3 to 0.18 g/cm3.

8. Filter medium (1) according to one of claims 1 to 7, wherein the second layer (5) comprises fibres (8) with a fibre thickness of 7 µm to 25 µm, preferably 10 µm to 20 µm and particularly preferably 15 µm to 18 µm.

9. Filter medium (1) according to one of the preceding claims, wherein the synthetic first and/or second polymer consists of at least one polymer from the group polyethylene (PE), polyethylene terephthalate (PET), polycarbonate (PC), polyamide (PA), polybutylene terephthalate (PBT), polypropylene (PP), polyester and/or polyvinyl chloride (PVC).

10. Filter with a filter medium according to one of the preceding claims.

## Revendications

1. Milieu filtrant (1) constitué d'un premier polymère synthétique, présentant une première couche de non-tissé (2), laquelle est fabriquée au moyen d'un procédé de filage par fusion, dans lequel une charge électrostatique peut être appliquée sur la première couche de non-tissé (2), et une deuxième couche de non-tissé (5) de stabilisation composée du premier et/ou d'un deuxième polymère, en particulier pour réaliser la capacité de plissage, dans lequel le premier polymère synthétique présente un indice de fluidité de 20 à 200, de manière préférée de 40 à 100 et encore plus préférablement de 60, déterminé selon la norme DIN EN ISO 1133, dans lequel la deuxième couche (5) présente des fibres (8) plus épaisses que la première couche (2) et dans lequel la première couche (2) présente des faisceaux de fibres composés de fibres de différents polymères synthétiques.

2. Milieu filtrant (1) selon l'une quelconque des revendications précédentes, dans lequel la première couche de non-tissé (2) présente une occupation en masse d'environ 35 à 60 g/m², de manière préférée d'environ 40 g/m² à 55 g/m², de manière particulièrement préférée d'environ 45 à 50 g/m² et idéalement d'environ 47,5 g/m².

3. Milieu filtrant (1) selon l'une quelconque des revendications précédentes, dans lequel la première couche de non-tissé (2) présente une perméabilité à l'air d'environ 800 l/m²s à 1 300 l/m² s, de manière préférée d'environ 900 l/m²s à 1 200 l/m²s et idéalement d'environ 1 000 l/m² s.

4. Milieu filtrant (1) selon l'une quelconque des revendications précédentes, dans lequel la première couche présente une densité volumique comprise entre 0,01 g/cm³ et 0,12 g/cm³, de manière préférée entre 0,03 g/cm³ et 0,10 g/cm³ et idéalement de 0,07 g/cm ³.

5. Milieu filtrant (1) selon l'une quelconque des revendications précédentes, dans lequel les fibres (6) de la première couche (2) présentent une épaisseur de fibres de 3 µm à 10 µm et de manière préférée de 4 µm à 5 µm.

6. Milieu filtrant (1) selon la revendication 1, dans lequel les fibres de la première couche de non-tissé (2) et les fibres (6, 8) de la deuxième couche de non-tissé (5) sont entrelacées dans une couche limite.

7. Milieu filtrant (1) selon l'une quelconque des revendications 1 à 6, dans lequel la deuxième couche de non-tissé (5) présente une densité volumique supérieure à la première couche (2), en particulier de 0,12 g/cm³ à 0,20 g/cm³, plus préférablement de 0,15 g/cm³ à 0,18 g/cm 3.

8. Milieu filtrant (1) selon l'une quelconque des revendications 1 à 7, dans lequel la deuxième couche (5) présente des fibres (8) avec une épaisseur de fibres de 7 µm à 25 µm, de manière préférée de 10 µm à 20 µm et de manière particulièrement préférée de 15 µm à 18 µm.

9. Milieu filtrant (1) selon l'une quelconque des revendications précédentes, dans lequel le premier et/ou le deuxième polymère synthétique sont constitués d'au moins un polymère du groupe polyéthylène (PE), polytéréphtalate d'éthylène (PET), polycarbonate (PC), polyamide (PA), polytéréphtalate de butylène (PBT), polypropylène (PP), polyester et/ou polychlorure de vinyle (PVC).

10. Filtre avec un milieu filtrant selon l'une quelconque des revendications précédentes.
